(19) Europäisches Patentamt
European Patent Office
Office européen des brevets

(11) **EP 1 921 430 B1**

(12) **EUROPÄISCHE PATENTSCHRIFT**

(45) Veröffentlichungstag und Bekanntmachung des Hinweises auf die Patenterteilung:
**27.03.2019   Patentblatt 2019/13**

(21) Anmeldenummer: **07117514.5**

(22) Anmeldetag: **28.09.2007**

(51) Int Cl.:
*G01K 7/18* (2006.01)      *G01N 15/06* (2006.01)

(54) **VERFAHREN ZUR BESTIMMUNG DER AN EINEM RESISTIVEN PARTIKELSENSOR HERRSCHENDEN TEMPERATUR**

METHOD FOR DETERMINING THE TEMPERATURE ON A RESISTIVE PARTICLE SENSOR

PROCÉDÉ DESTINÉ À LA DÉTERMINATION DE LA TEMPÉRATURE RÉGNANT SUR UN CAPTEUR À PARTICULES RÉSISTIVES

(84) Benannte Vertragsstaaten:
**DE FR GB**

(30) Priorität: **10.11.2006   DE 102006053100**

(43) Veröffentlichungstag der Anmeldung:
**14.05.2008   Patentblatt 2008/20**

(73) Patentinhaber: **ROBERT BOSCH GMBH**
**70442 Stuttgart (DE)**

(72) Erfinder:
• **Baars, Enno**
  **70839 Gerlingen (DE)**
• **Winkler, Anna Karoline**
  **70469 Stuttgart-Feuerbach (DE)**
• **Diehl, Lothar**
  **70839 Gerlingen (DE)**
• **Schittenhelm, Henrik**
  **70182 Stuttgart (DE)**

(56) Entgegenhaltungen:
US-A- 5 345 213      US-A- 5 918 263
US-A1- 2002 118 027      US-A1- 2004 178 069
US-B1- 6 418 784

EP 1 921 430 B1

**Beschreibung**

Die Erfindung geht aus von einem Verfahren zur Bestimmung der an einem resistiven Partikelsensor herrschenden Temperatur sowie einem resistiven Partikelsensor, betrieben durch ein Verfahren gemäß der im Oberbegriff der unabhängigen Ansprüche definierten Art.

Stand der Technik

Derzeit sind resistive Partikelsensoren für leitfähige Partikel bekannt, bei denen zwei oder mehrere metallische Elektroden ausgebildet sind, wobei die sich anlagernden Teilchen, insbesondere Rußpartikel, die vorzugsweise kammartig ineinander greifenden Elektroden kurzschließen und damit mit steigender Partikelkonzentration auf den Sensoroberflächen ein abnehmender Widerstand zwischen den Elektroden messbar wird.

So wird in der WO 2006/077197 A1 ein Sensor zur Detektion von Partikeln in einem Fluidstrom beschrieben, der auf der Basis eines keramischen Mehrlagensubstrats ausgeführt ist. Er umfasst zwei voneinander beabstandete Messelektroden, die dem zu untersuchenden Verbrennungsabgas ausgesetzt sind. Lagert sich zwischen den beiden Messelektroden Ruß ab, so kommt es beim Anlegen einer Spannung an die Messelektroden zu einem Stromfluss zwischen den Messelektroden. Ein schichtförmig ausgeführtes Heizelement ermöglicht es, die Elektroden bzw. deren Umgebung auf thermischem Wege von abgelagerten Rußpartikeln zu befreien. Der Sensor umfasst weiterhin ein Temperaturmesselement, mit dem die Temperatur des Sensors detektiert werden kann. Das Heizelement befindet sich innerhalb des Schichtverbundes des Sensors zwischen dem Temperaturmesselement und den Messelektroden.

Zur Bestimmung der Partikelkonzentration im Abgas muss das Sensorsignal auf verschiedene Quereinflüsse kompensiert werden. Für diese Kompensation ist unter anderem die Kenntnis der Temperatur des Sensorelements notwendig. Ein herkömmlicher Partikelsensor erfordert derzeit 4 bis 5 Anschlussleitungen. Die Herstellung und der Abgleich des separaten Temperaturmessmäanders im Sensorelement sind aber ein erheblicher Kostenanteil am Gesamtsensor.

Es besteht folglich weiterhin der Bedarf an einem Partikelsensor, welcher ohne separate Temperaturmesseinrichtung bei gleichzeitig hoher Signalqualität auskommt. Ebenso besteht der Bedarf an einem Verfahren zur Bestimmung der an einem solchen Partikelsensor herrschenden Temperatur. Beispiele für Partikelsensoren, bei denen das Heizelement als Temperaturmesseinrichtung verwendet wird, sind in Dokumente US 2002/118027 A1 und US 5,345,213 angegeben.

Offenbarung der Erfindung

Das erfindungsgemäße Verfahren zur Bestimmung der an einem resistiven Partikelsensor herrschenden Temperatur mit den Merkmalen nach dem Oberbegriff des Patentanspruchs 1 umfasst die Schritte:

   a) Messen des elektrischen Widerstands des Heizelements $R_H$
   b) Ermitteln einer modellbasierten Temperatur $T_M$
   c) Korrelieren des Widerstands $R_H$ mit der zum Zeitpunkt der Messung von $R_H$ ermittelten Temperatur $T_M$
   d) Berechnen einer Ausgleichsfunktion durch die Menge der in Schritt c) gewonnenen Datenpunkte
   e) Berechnen einer Sensortemperatur T aus den in der Ausgleichsfunktion in Schritt d) erhaltenen Werten

hat den Vorteil, dass nach diesem Verfahren betriebene Partikelsensor keine separate Temperaturmesseinrichtung aufweisen müssen, somit keine zusätzlichen Bauteile eingefügt werden müssen und ein vereinfachter Aufbau bei gleichzeitig hoher Signalqualität möglich ist.

Das in Schritt a) erwähnte Heizelement umfasst zweckmäßigerweise ein Platin-Heizelement. Als solches liegt ein PTC-Element vor, also ein Heizelement mit einem positiven Temperaturkoeffizienten des elektrischen Widerstands.

Die in Schritt b) erwähnte modellbasierte Temperatur kann einem Temperaturmodell des Motors und des Abgasstrangs entspringen. Beispielsweise kann so aus der Kenntnis von Motordrehzahl, Motorlast, Wärmekapazität und Abstrahlverhalten dieser Baugruppen auf die an dem Partikelsensor selber herrschende Temperatur indirekt geschlossen werden.

Das Korrelieren des elektrischen Widerstands des Heizelements $R_H$ mit der zum Zeitpunkt der Messung von $R_H$ ermittelten modellbasierten Temperatur $T_M$ in Schritt c) kann als lineare Regression geschehen. Beispielsweise kann $R_H$ die x-Achse darstellen und $T_M$ die y-Achse. Man erhält so mit fortschreitender Messzeit eine Punktwolke von korrelierten Messwerten.

Das Berechnen der Ausgleichsfunktion durch die Menge der Datenpunkte in Schritt d) kann nach dem Verfahren der Minimierung der quadratischen Abweichungen geschehen. Da die Streuung von $T_M$ größer als die Streuung von $R_H$ ist, ist es zweckmäßig, $T_M$ als y-Achse zu verwenden.

Im zweidimensionalen Fall, also bei der Auftragung von $T_M$ gegen $R_H$, erhält man als Ausgleichsfunktion eine Geradengleichung:

$$T_M(R_H) = m\,R_H + b$$

mit m als Steigung der Geraden und b als Ordinatenabschnitt.

Im Schritt e) wird eine an dem Partikelsensor herrschende Temperatur T aus den im vorigen Schritt durch die Ausgleichsfunktion erhaltenen Werten berechnet.

Die Temperatur T des Heizelements und somit die Temperatur des Partikelsensors berechnet sich aus einem Grundwiderstand des Heizelements $R_0$, dem gemessenen Widerstand $R_H$ und einer Temperaturabhängigkeit $\alpha$ gemäß der Gleichung:

$$R_H = R_0(1 + \alpha\,T)$$

und damit:

$$T = \frac{1}{\alpha}\left(\frac{R_H}{R_0} - 1\right)$$

Die Steigung m der Ausgleichsfunktion ergibt sich zu:

$$m = \frac{1}{\alpha\,R_0} = \frac{\Delta T_M}{\Delta R_H}$$

und die Temperaturabhängigkeit $\alpha$:

$$\alpha = \frac{\Delta R_H}{R_0\,\Delta T_M}$$

Die Konstante $R_0$ wiederum kann aus definierten Punkten der Ausgleichsfunktion über den Ordinatenabschnitt b ermittelt werden.

Ein Zusatznutzen des erfindungsgemäßen Verfahrens ist die Möglichkeit, eine Alterung des Heizelements zu erkennen, indem man die Änderung der bestimmten Konstanten $\alpha$ und $R_0$ verfolgt. Über die Beobachtung der langfristigen Änderungen in der Ausgleichsfunktion kann die Drift/Alterung quantifiziert werden. Beispielsweise kann bei der Bestimmung über die letzten 100, 200 oder 1000 Datensätze gemittelt werden. Damit wird auch eine Anpassung der zur Vollregeneration des Sensors nötigen Heizleistung über die Lebensdauer des Sensors ermöglicht.

Ein weiterer Zusatznutzen kann über die Erkennung einer Drift der Eigenleitfähigkeit des Isolationsschichtsystems unterhalb des Elektrodensystems im Partikelsensor erreicht werden. In einem Eigendiagnosekonzept eines resistiven Partikelsensors kann vorgesehen sein, die Eigenleitfähigkeit der Isolationsschichten unterhalb des Elektrodensystems während einer Regenerationsphase zu bestimmen und so die Intaktheit der Elektrode festzustellen. Durch eine Verbesserung der Temperaturmessung kann auch die Drift der temperaturabhängigen Eigenleitfähigkeit der Isolationsschicht besser gemessen und bei Bedarf in einem Steuergerät korrigiert werden.

In einer vorteilhaften Ausführungsform der vorliegenden Erfindung wird die Heizeinrichtung konstant bei einer Temperatur von ≥ 100 °C bis ≤ 500 °C, vorzugsweise von ≥ 200 °C bis ≤ 450 °C, mehr bevorzugt von ≥ 300 °C bis ≤ 400 °C betrieben. Der Begriff "konstant" ist hierbei so zu verstehen, dass die Temperatur um nicht mehr als 10% um einen vorgegebenen Wert schwankt. Die angegebene Temperatur liegt unter der Temperatur, bei der die Rußpartikelschicht auf der Elektrodenoberfläche abbrennt. Auf diese Weise kann die tatsächliche Variation der Temperatur der Partikelschicht verringert werden, deren Temperaturabhängigkeit ihrer elektrischen Leitfähigkeit eine Quelle von Ungenauigkeit bei der Bestimmung der Partikelmenge auf den Messelektroden darstellen kann. Gleichzeitig hat diese Betriebsart den Vorteil, die Kondensation von Wasser, Kohlenwasserstoffen oder anderen Substanzen auf den Messelektroden des Partikelsensors zu unterbinden. Da die thermophoretische Abscheidung nur einen geringen Anteil an der Ablagerung der Partikel auf den Messelektroden ausmacht, wird die Empfindlichkeit des Sensors hierdurch nicht geschmälert.

In einer weiteren vorteilhaften Ausführungsform der vorliegenden Erfindung wird zusätzlich nach Schritt b) die von der Heizeinrichtung aufgenommene elektrische Leistung $P_H$ gemessen und in Schritt c) ebenfalls mit $R_H$ und $T_M$ korreliert. Somit wird $P_H$ während eines eigenbeheizten Zustandes des Partikelsensors gemessen. Man erhält eine dreidimensionale Punktwolke mit Messwerten.

Die Datensätze können mittels mehrdimensionaler linearer Regression analysiert werden. Hierzu wird eine Ebene in den $P_H/R_H/T_M$-Raum gelegt und es werden die Quadrate der Abweichungen der $T_M$-Werte minimiert.

Bei einer Einbeziehung der aufgenommenen elektrischen Leistung $P_H$ wird es möglich, auch die Kühlung oder Erwärmung des Sensorelements je nach Anströmung durch das Abgas mit einzubeziehen. Ein Modellzustand, der eine ungenaue Temperatur aufgrund einer hohen Anströmung vorhersagt, wird nun verbessert abgeglichen.

Der Heizerwiderstand $R_H$ steigt durch die eingebrachte Heizleistung PH mit der Temperatur des Sensorelementes an. An ruhendem Abgas ist für ein festes Design der Anlage folgender Zusammenhang in Form einer quadratischen Reihenentwicklung ermittelbar:

$$R_H = R_0 \left( 1 + a_1 P_H + a_2 P_H^2 + ... \right)$$

Die Konstanten $a_1$, $a_2$, etc. ergeben sich aus dem Abstrahlverhalten und der Wärmeleitung. Jede Erniedrigung von $R_H$ ist ein Hinweis auf strömendes Abgas, das als zusätzlicher Term in die Reihenentwicklung eingeht:

$$R_H = R_0 \left( 1 + a_1 P_H + a_2 P_H^2 + ... - b_1 v_{gas} - b_2 v_{gas}^2 - ... \right)$$

Die Konstanten $b_1$, $b_2$, etc. ergeben sich aus dem Abkühlungsverhalten und der Geometrie des Sensorelementes. Aus dieser Beziehung kann also die Abgasgeschwindigkeit $v_{gas}$ über dem Sensorelement bestimmt werden. Da nun aber diese Abgasgeschwindigkeit in einem festen, designabhängigen Zusammenhang zur Abgasgeschwindigkeit im gesamten Abgasrohr steht, kann so ein Abgleich der Gasgeschwindigkeit aus den Parametern des Modells des Motors erfolgen. Festzuhalten ist, dass bei eingeschaltetem Heizer, wie vorstehend beschrieben, die Abgasgeschwindigkeit bestimmt werden kann und bei ausgeschaltetem Heizer die am Partikelsensor herrschende Temperatur.

Es ist weiterhin möglich, im Rahmen einer verbesserten Näherung die Abgastemperatur mit in die Bestimmung der Abgasgeschwindigkeit einfließen zu lassen. Bei geringerer Beheizung beziehungsweise bei heißerem Abgas nimmt die Kühlung durch die Temperaturdifferenz zwischen Abgas und Sensorelement ab.

Günstig ist es auch, den Wassergehalt des Abgases über seine Wärmekapazität zu bestimmen. Dieses kann über die Abweichungen der Korrelation der Abgasgeschwindigkeit vom Motor und der aus der Abkühlung am Sensorelement bestimmten Abgasgeschwindigkeit geschehen.

In einer weiteren vorteilhaften Ausführungsform der vorliegenden Erfindung wird die Heizeinrichtung periodisch bei einer Temperatur von ≥ 100 °C bis ≤ 500 °C, vorzugsweise von ≥ 200 °C bis ≤ 450 °C, mehr bevorzugt von ≥ 300 °C bis ≤ 400 °C betrieben. Der Begriff "periodisch" ist hierbei so zu verstehen, dass in regelmäßigen Zeitabständen für eine bestimmte Zeitdauer die Heizeinrichtung betrieben wird. Die regelmäßigen Zeitabstände können beispielsweise 1, 2, 10 oder 60 Sekunden betragen. Die Zeitdauer des Betriebs der Heizeinrichtung kann beispielsweise 1, 2 oder 10 Sekunden betragen. Ein solcher periodischer Betrieb ist dann von Vorteil, wenn sich die Fahrsituation wenig ändert, da eine große Menge an Daten zur Bestimmung der Temperatur und der Abgasgeschwindigkeit gewonnen werden kann bei gleichzeitig begrenzter Speicherkapazität der nachgeschalteten datenverarbeitenden Systeme.

In einer weiteren vorteilhaften Ausführungsform der vorliegenden Erfindung wird die Heizeinrichtung stochastisch bei einer Temperatur von ≥ 100 °C bis ≤ 500 °C, vorzugsweise von ≥ 200 °C bis ≤ 450 °C, mehr bevorzugt von ≥ 300 °C bis ≤ 400 °C betrieben. Der Begriff "stochastisch" ist hierbei so zu verstehen, dass die Heizeinrichtung in zufälligen Zeitabständen für eine zufällige Zeitdauer betrieben wird. Ein solcher stochastischer Betrieb ist dann von Vorteil, wenn sich die Fahrsituation stark ändert. Durch den zufälligen Betrieb des Heizers werden in ebenso zufälligen Abständen die Temperatur und die Abgasgeschwindigkeit bestimmt. Somit kann ein repräsentativerer Datensatz über die variierenden Fahrzustände gewonnen werden.

In einer weiteren vorteilhaften Ausführungsform der vorliegenden Erfindung wird die Heizeinrichtung bei einer Temperatur von ≥ 500 °C bis ≤ 1000 °C, vorzugsweise von ≥ 600 °C bis ≤ 900 °C, mehr bevorzugt von ≥ 700 °C bis ≤ 800 °C betrieben. Diese Temperatur liegt oberhalb der Temperatur, bei der die Rußpartikelschicht auf der Elektrodenoberfläche abbrennt. Ein Betrieb bei diesen Temperaturen erlaubt es, die Abgasgeschwindigkeit, wie bereits vorstehend beschrieben, nun besonders genau zu bestimmen.

Gegenstand der vorliegenden Erfindung ist weiterhin ein resistiver Partikelsensor, betrieben durch ein Verfahren nach der vorliegenden Erfindung.

Solch ein Sensor zeichnet sich durch einen vereinfachten Aufbau und eine kostengünstigere Herstellung aus.

Zeichnung

Ein Ausführungsbeispiel des erfindungsgemäßen Verfahrens ist in der Zeichnung dargestellt und wird nachfolgend näher erläutert. Es zeigt:

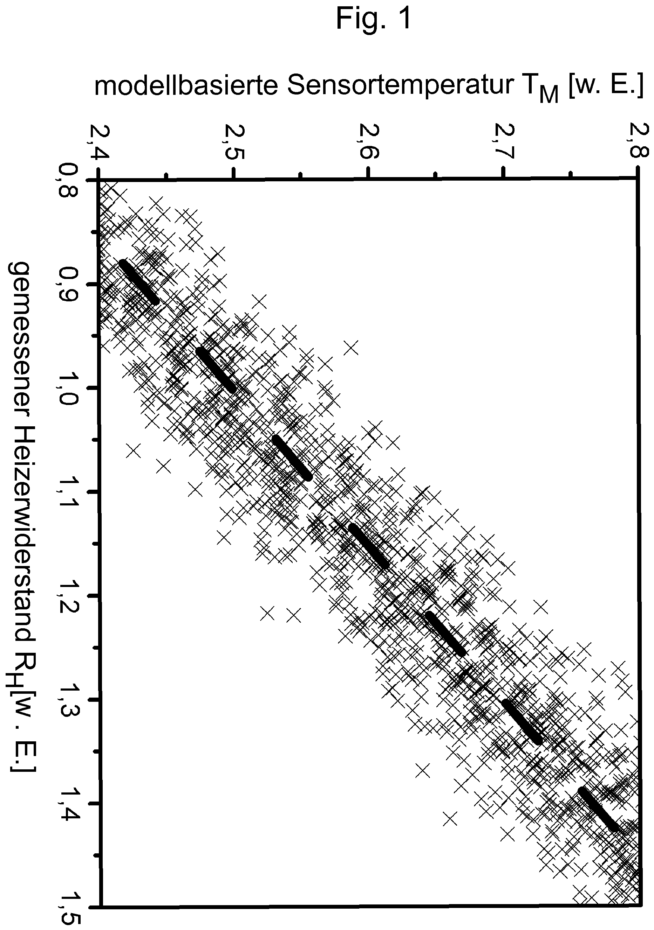

Figur 1    eine Korrelation zwischen dem gemessenen Heizerwiderstand und der modellbasierten Temperatur eines Sensorelements

Figur 1 zeigt eine Korrelation zwischen dem gemessenen elektrischen Widerstand des Heizelements $R_H$ (in willkürlichen Einheiten) und der modellbasierten Sensortemperatur $T_M$ (in willkürlichen Einheiten). Bedingt durch Streuungen in der Fertigung des Sensorelements und in den Messungen ergibt sich eine Punktwolke, durch die eine Ausgleichsgerade gelegt werden kann (gestrichelte Linie). Im Laufe des Betriebs kann die Ausgleichsgerade mit immer besserer Genauigkeit ermittelt werden. Durch das erfindungsgemäße Verfahren können die jeweiligen Fehler der Messverfahren sich gegenseitig aufheben. $R_H$ wird mit einer gewissen Streuung gemessen; hier hilft $T_M$ aus dem Temperaturmodell. $T_M$ ist in einigen Stellen des Temperaturmodells bei besonderen Fahrzuständen ungenauer; hier hilft $R_H$ trotz der Streuung, da immer in diesem Fahrzustand die ungenauere Temperatur des Modells auftritt.

**Patentansprüche**

1. Verfahren zur Bestimmung der an einem einem Abgas ausgesetzten resistiven Partikelsensor für Rußpartikel herrschenden Temperatur,
   wobei der resistive Partikelsensor eine Heizeinrichtung umfasst,
   **umfassend die Schritte:**

   a) Messen des elektrischen Widerstands eines Heizelements $R_H$, wobei das Heizelement ein Platin PCT-Element ist mit einem positiven Temperaturkoeffizienten des elektrischen Widerstands
   b) Ermitteln einer modellbasierten Temperatur $T_M$, die einem Temperaturmodell eines Motors und eines Abgasstrangs entspringt, durch das aus der Kenntnis einer Motordrehzahl, Motorlast, Wärmekapazität und Abstrahlverhalten dieser Baugruppen auf die an dem Partikelsensor selber herrschende Temperatur indirekt geschlossen werden kann
   c) Korrelieren des Widerstands $R_H$ mit der zum Zeitpunkt der Messung von $R_H$ ermittelten Temperatur $T_M$ mittels linearer Regression, sodass mit fortschreitender Messzeit eine Punktewolke von korrelierten Messwerte entsteht
   d) Berechnen einer Ausgleichsfunktion durch eine Menge von in Schritt c) bei unterschiedliche Temperaturen $T_M$ gewonnenen Datenpunkten, wobei die Ausgleichsfunktion eine Geradengleichung zwischen der Temperatur $T_M$ und dem Widerstand $R_H$ ist, die im Laufe des Betriebs des Partikelsensors für Russpartikel mit immer besserer Genauigkeit ermittelt werden kann.
   e) Berechnen einer Sensortemperatur T aus den in der Ausgleichsfunktion in Schritt d) erhaltenen Werten

2. Verfahren nach Anspruch 1, wobei die Heizeinrichtung konstant bei einer Temperatur von ≥ 100 °C bis ≤ 500 °C, vorzugsweise von ≥ 200 °C bis ≤ 450 °C, mehr bevorzugt von ≥ 300 °C bis ≤ 400 °C betrieben wird.

3. Verfahren nach Anspruch 1, wobei zusätzlich nach Schritt b) die von der Heizeinrichtung aufgenommene elektrische Leistung $P_H$ gemessen wird und in Schritt c) ebenfalls mit $R_H$ und $T_M$ korreliert wird.

4. Verfahren nach Anspruch 3, wobei die Heizeinrichtung periodisch bei einer Temperatur von ≥ 100 °C bis ≤ 500 °C, vorzugsweise von ≥ 200 °C bis ≤ 450 °C, mehr bevorzugt von ≥ 300 °C bis ≤ 400 °C betrieben wird.

5. Verfahren nach Anspruch 3, wobei die Heizeinrichtung stochastisch bei einer Temperatur von ≥ 100 °C bis ≤ 500 °C, vorzugsweise von ≥ 200 °C bis ≤ 450 °C, mehr bevorzugt von ≥ 300 °C bis ≤ 400 °C betrieben wird.

6. Verfahren nach Anspruch 3, wobei die Heizeinrichtung bei einer Temperatur von ≥ 500 °C bis ≤ 1000 °C, vorzugsweise von ≥ 600 °C bis ≤ 900 °C, mehr bevorzugt von ≥ 700 °C bis ≤ 800 °C betrieben wird.

**Claims**

1. Method for determining the temperature on a resistive particle sensor, subjected to an exhaust gas, for soot particles, wherein the resistive particle sensor comprises a heating device,

   **comprising the steps:**

   a) measuring the electrical resistance of a heating element $R_H$, wherein the heating element is a platinum PCT element with a positive temperature coefficient of the electrical resistance,

   b) determining a model-based temperature $T_M$ which is obtained from a temperature model of an engine and of an exhaust train, by means of which model the temperature at the actual particle sensor can be inferred indirectly from the knowledge of an engine rotational speed, engine load, heat capacity and irradiation behaviour of these assemblies on the temperature at the particle sensor itself,

   c) correlating the resistance $R_H$ with the temperature $T_M$ determined at the time of the measurement of $R_H$, by means of linear regression, with the result that as the measuring time progresses a point cloud of correlated measured values is produced,

   d) calculating an equalizing function by means of a quantity of data points acquired in step c) at different temperatures $T_M$, wherein the equalizing function is a linear equation between the temperature $T_M$ and the resistance $R_H$ which can be determined with improving accuracy in the course of the operation of the particle sensor for soot particles, and

   e) calculating a sensor temperature T from the values obtained in the equalizing function in step d).

2. Method according to Claim 1, wherein the heating device is operated constantly at a temperature of $\geq 100°C$ up to $\leq 500°C$, preferably from $\geq 200°C$ up to $\leq 450°C$, more preferably from $\geq 300°C$ up to $\leq 400°C$.

3. Method according to Claim 1, wherein after step b) the electrical power $P_H$ which is taken up by the heating device is additionally measured, and in step c) it is also correlated with $R_H$ and $T_M$.

4. Method according to Claim 3, wherein the heating device is periodically operated at a temperature from $\geq 100°C$ up to $\leq 500°C$, preferably from $\geq 200°C$ up to $\leq 450°C$, more preferably from $\geq 300°C$ up to $\leq 400°C$.

5. Method according to Claim 3, wherein the heating device is operated stochastically at a temperature from $\geq 100°C$ up to $\leq 500°C$, preferably from $\geq 200°C$ up to $\leq 450°C$, more preferably from $\geq 300°C$ up to $\leq 400°C$.

6. Method according to Claim 3, wherein the heating device is operated at a temperature from $\geq 500°C$ up to $\leq 1000°C$, preferably from $\geq 600°C$ up to $\leq 900°C$, more preferably from $\geq 700°C$ up to $\leq 800°C$.

**Revendications**

1. Procédé destiné à la détermination de la température régnant sur un capteur à particules résistif pour particules de suie qui est exposé à un gaz d'échappement, dans lequel le capteur de particules résistif comprend un dispositif de chauffage, comprenant les étapes consistant à :

   a) mesurer la résistance électrique d'un élément chauffant $R_H$, dans lequel l'élément chauffant est un élément PCT en platine présentant un coefficient de température positif de la résistance électrique,

   b) déterminer une température $T_M$ à base de modèle qui provient d'un modèle de température d'un moteur et d'un circuit de gaz d'échappement, au moyen duquel la température régnant sur le capteur de particules lui-même peut être indirectement déduite de la connaissance du régime du moteur, de la charge du moteur, de la capacité thermique et du comportement au rayonnement de ces ensembles,

   c) corréler au moyen d'une régression linéaire la résistance $R_H$ avec la température $T_M$ déterminée au moment de la mesure de l'humidité relative $R_H$, de manière à ce qu'un nuage de points de valeurs de mesure corrélées se forme à mesure que le temps de mesure progresse,

   d) calculer une fonction de compensation à partir d'un ensemble de points de données obtenus à l'étape c) à différentes températures $T_M$, dans lequel la fonction de compensation est une équation linéaire entre la température $T_M$ et la résistance $R_H$, qui peut être déterminée au cours du fonctionnement du capteur de particules pour particules de suie avec une précision toujours plus grande,

   e) calculer une température de capteur T à partir des valeurs obtenues à l'étape d) dans la fonction de compensation.

**2.** Procédé selon la revendication 1, dans lequel le dispositif de chauffage fonctionne constamment à une température de $\geq$ 100 °C à $\leq$ 500 °C, de préférence de $\geq$ 200 °C à $\leq$ 450 °C, et plus préférentiellement de $\geq$ 300 °C à $\leq$ 400 °C.

**3.** Procédé selon la revendication 1, dans lequel, après l'étape b), la puissance électrique $P_H$ consommée par le dispositif de chauffage est en outre mesurée et est également corrélée avec $R_H$ et $T_M$ à l'étape c).

**4.** Procédé selon la revendication 3, dans lequel le dispositif de chauffage est utilisé périodiquement à une température de $\geq$ 100 °C à $\leq$ 500 °C, de préférence de $\geq$ 200 °C à $\leq$ 450 °C, et plus préférentiellement de $\geq$ 300 °C à $\leq$ 400 °C.

**5.** Procédé selon la revendication 3, dans lequel le dispositif de chauffage est utilisé de manière stochastique à une température de $\geq$ 100 °C à $\leq$ 500 °C, de préférence de $\geq$ 200 °C à $\leq$ 450 °C, et plus préférentiellement de $\geq$ 300 °C à $\leq$ 400 °C.

**6.** Procédé selon la revendication 3, dans lequel le dispositif de chauffage est utilisé à une température de $\geq$ 500 °C à $\leq$ 1000 °C, de préférence de $\geq$ 600 °C à $\leq$ 900 °C, et plus préférentiellement de $\geq$ 700 °C à $\leq$ 800 °C.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006077197 A1
- US 20020118027 A1
- US 5345213 A